# EUROPEAN PATENT SPECIFICATION

(11) **EP 2 164 049 B1**
(45) Date of publication and mention of the grant of the patent: **09.01.2013**
(21) Application number: 08764957.0
(22) Date of filing: 26.05.2008
(51) Int. Cl.: G06F 17/50, D06F 89/02, G06T 15/00, A41H 3/00

(54) **KNITWEAR FOLDING SIMULATION APPARATUS, SIMULATION METHOD, AND STORAGE MEDIUM**
STRICKWARENFALTSIMULATIONSVORRICHTUNG, SIMULATIONSVERFAHREN UND AUFBEWAHRUNGSMEDIUM
APPAREIL DE SIMULATION DE PLIAGE DE VÊTEMENTS TRICOTÉS, PROCÉDÉ DE SIMULATION ET SUPPORT DE STOCKAGE

(30) Priority: 05.06.2007 JP 2007148885
(43) Date of publication of application: 17.03.2010
(73) Proprietor: Shima Seiki Manufacturing., Ltd., Wakayama-shi, Wakayama 641-0003 (JP)
(72) Inventor: YAMAMOTO, Shinji, Wakayama-shi Wakayama 641-0003 (JP); NISHIKAWA, Tadanori, Wakayama-shi Wakayama 641-0003 (JP)
(74) Representative: Wagner, Karl H.
(86) International application number: PCT/JP2008/060103
(87) International publication number: WO 2008/149827

(56) References cited:
- EP-A1- 1 452 985
- WO-A1-2005/082185
- HUA ZHONG ET AL: "Realistic and efficient rendering of free-form knitwear", JOURNAL OF VISUALIZATION AND COMPUTER ANIMATION, WILEY UK, vol. 12, no. 1, 1 February 2001 (2001-02-01), pages 13-22, XP002512447, DOI: 10.1002/VIS.241
- MITANI J.: 'Development of Origami Pattern Editor (ORPIA) and a Method for Estimating a Folded Configuration of Origami from the Crease Pattern' IPSJ JOURNAL vol. 47, no. 9, September 2007, pages 3309 - 3317, XP008124861

## Description

The present invention relates to simulation of folding virtual knitwear.

The applicant has developed a technology for converting design data of a knit product to a 3D simulation image (Patent Literature 1: JP2005-242611A). However, it is not easy to simulate a condition where the knit product is folded. This is because it is necessary to move stitches to the other side with respect to a bend line as a border, in order to fold virtual knitwear, and it is difficult to obtain the arrangement of the stitches after moving the stitches.

An object of the present invention is to promptly and realistically simulate a condition where virtual knitwear is folded. -

Another object of the present invention is to simulate a condition where the folded knitwear is stacked in a store.

The present invention is an apparatus that obtains, on the basis of design data, filament data expressing, on virtual cylindrical knitwear, 3D positions of stitches and a connecting relation between the stitches, and generates a 3D simulation image of the knitwear on the basis of the obtained filament data, the apparatus being characterized in having:
flat arrangement means for arranging, on faces of the stitches, the stitches shown in the filament data so that the virtual knitwear is arranged flatly;
bend line setting means for setting, with respect to the flatly arranged virtual knitwear, a bend line along a surface of the knitwear;
bending means for bending the face of each stitch shown in the filament data at a boundary face containing the set bend line and perpendicular to the surface of the knitwear, rotating the boundary face 90° in a direction of bending the face of each stitch, providing a predetermined space between the faces of two stitches near the boundary face that are faced with each other by bending the face of each stitch inward, and defining a position of the bent face of each stitch by causing the faces of the two stitches and the faces of two stitches far from the boundary face to slide away from each other;
smoothing means for correcting, with respect to the bent faces of the stitches, the positions of the stitches so that the faces of the stitches on both sides of the boundary face are smoothly connected with each other when the faces of the stitches are bent on the both sides of the boundary face;
segment generating means for generating segments by breaking each stitch into a plurality of segments, with respect to the positions of the stitches defined by the smoothing means;
polygon generating means for breaking each of the generated segments into a plurality of polygons; and
display image generating means for mapping and shading a texture of yarn on the generated polygons, and performing rendering on thus obtained result to generate a display image.

The present invention is also a method for obtaining, on the basis of design data, filament data expressing, on virtual cylindrical knitwear, 3D positions of stitches and a connecting relation between the stitches, and generating a 3D simulation image of the knitwear on the basis of the obtained filament data, the method being characterized in having:
a flattening step of arranging, on faces of the stitches, the stitches shown in the filament data so that the virtual knitwear is arranged flatly;
a bend line setting step of setting, with respect to the flatly arranged virtual knitwear, a bend line along a surface of the knitwear;
a bending step of bending the face of each stitch shown in the filament data at a boundary face containing the set bend line and perpendicular to the surface of the knitwear, rotating the boundary face 90° in a direction of bending the face of each stitch, providing a predetermined space between the faces of two stitches near the boundary face that are faced with each other by bending the face of each stitch inward, and defining a position of the bent face of each stitch by causing the faces of the two stitches and the faces of two stitches far from the boundary face to slide away from each other;
a smoothing step of correcting, with respect to the bent faces of the stitches, the positions of the stitches so that the faces of the stitches on both sides of the boundary face are smoothly connected with each other when the faces of the stitches are bent on the both sides of the boundary face;
a segment generating step of generating segments by breaking each stitch into a plurality of segments, with respect to the positions of the stitches defined by the smoothing means;
a polygon generating step of breaking each of the generated segments into a plurality of polygons; and
a step of mapping and shading a texture of yarn on the generated polygons, and performing rendering on thus obtained result to generate a display image.

In this specification, the description of the simulation apparatus applies directly to the simulation method, and the description of the simulation method applies directly to the simulation apparatus. A line that is set initially on the flattened knitwear is the bend line, which does not move even after bending the faces of the stitches. The surface that contains the bend line and is perpendicular to the flat knitwear is the boundary face, which is rotated 90° by bending the faces of the stitches.

It is preferred that the smoothing means correct the positions of the stitches by inclining the faces of the stitches in the vicinity of the bend line, and further correct the corrected positions of the stitches so that the interval between the stitches approaches a predetermined value and the angle between the stitches changes smoothly on both sides of the boundary face.

It is more preferred that the simulation apparatus be provided with press means for correcting the positions of the stitches with respect to the filament data obtained after smoothing is performed, so that the thickness of the virtual knitwear is reduced.

It is preferred that the simulation apparatus be provided with means for vertically stacking the filament data in terms of the number of the virtual knitwear, the filament data being obtained after smoothing is performed.

The present invention is also a computer-readable recording medium, which stores therein a program for obtaining, on the basis of design data, filament data expressing, on virtual cylindrical knitwear, 3D positions of stitches and a connecting relation between the stitches, and generating a 3D simulation image of the knitwear on the basis of the obtained filament data, wherein the computer is caused to function as:
flat arrangement means for arranging, on faces of the stitches, the stitches shown in the filament data so that the virtual knitwear is arranged flatly;
bend line setting means for setting, with respect to the flatly arranged virtual knitwear, a bend line along a surface of the knitwear;
bending means for bending the face of each stitch shown in the filament data at a boundary face containing the set bend line and perpendicular to the surface of the knitwear, rotating the boundary face 90° in a direction of bending the face of each stitch, providing a predetermined space between the faces of two stitches near the boundary face that are faced with each other by bending the face of each stitch inward, and defining a position of the bent face of each stitch by causing the faces of the two stitches and the faces of two stitches far from the boundary face to slide away from each other;
smoothing means for correcting, with respect to the bent faces of the stitches, the positions of the stitches so that the faces of the stitches on both sides of the boundary face are smoothly connected with each other when the faces of the stitches are bent on the both sides of the boundary face;
segment generating means for generating segments by breaking each stitch into a plurality of segments, with respect to the positions of the stitches defined by the smoothing means;
polygon generating means for breaking each of the generated segments into a plurality of polygons; and
display image generating means for mapping and shading a texture of yarn on the generated polygons, and performing rendering on thus obtained result to generate a display image.

In this specification, the description of the simulation apparatus applies directly to the simulation method and simulation program, and the description of the simulation method applies directly to the simulation apparatus and simulation program.

In the present invention, the virtual knitwear is bent using the filament data. Because the filament data, which is 3D data, contains minimum required data of the positions of the stitches and the connecting relation between the stitches, a process of moving the stitches when bending the virtual knitwear can be performed easily. The virtual knitwear is arranged flatly before bending the virtual knitwear, and thereby the stitches are arranged substantially in a plane of each part, such as a front body, rear body, front right sleeve, and rear right sleeve. Next, the bend line is set, and the stitch faces are bent at a boundary face that contains the bend line and is perpendicular to the knitwear. Simply bend the stitch faces causes a problem where the stitch faces overlap on each other and the stitches collide with each other. The throughput increases when evaluating and avoiding the collision between the stitches and the presence/absence of interference between the stitches.

In the present invention, attention is drawn to the fact that the two faces near the boundary face and the two faces far from the boundary face are generated by bending the cylindrical knitwear. For example, by folding back the body to the rear side at an upper part of the hem, two faces on the rear body are faced with each other, and two faces are formed by folding the front body outward. In this case, the two faces on the rear body and the two faces on the front body are caused to slide away from each other and an appropriate space is provided between the two faces on the rear body, so that the stitches on the rear body and the stitches on the front body can be prevented from colliding with each other, or the stitches on the rear body can be prevented from colliding with each other. Even when the body is not bent to the rear body side in the vicinity of the hem, collision between the stitches can be prevented in a similar manner.

Next, the faces of the stitches are bent in the vicinity of the bend line to arrange the faces of the stitches smoothly. Thereafter, a plurality of segments are generated for each stitch, and the segments are connected to form a stitch. 3D-shaped virtual knitwear is defined by generating a plurality of polygons on the surface of each segment. The texture of yarn is mapped on the defined 3D shape, and shading is performed thereon. Consequently, a display image that can be output using a color monitor or printer can be obtained. This display image is a virtual sample of the virtual knitwear, which can be used in trading or the like. As a result, in the present invention, a virtual sample can be obtained by simulating a condition where the knitwear is folded, and a condition where the virtual knitwear is put on a hanger or mannequin or folded. A condition where the folded knitwear is stacked is suitable for providing a virtual knitwear store on the network.

In order to improve the accuracy of the folding simulation, it is desired that the smoothing be carried out at high speed precisely. That way, the process can be made simpler than inclining the faces of the stitches in the vicinity of the bend line and changing the direction of bending for each fine surface element to form curved faces of the stitches. Next, the arrangement of the stitches is changed so that the distance between the stitches approaches a predetermined value and the angle between the stitches changes smoothly on both sides of the boundary face. As a result, the stitches are arranged smoothly on both sides of the boundary face.

By correcting the positions of the stitches so that the thickness of the virtual knitwear is reduced, more realistic simulation can be performed.
Fig. 1 is a block diagram of a knitwear folding simulation apparatus of an embodiment;
Fig. 2 is a diagram showing the type of data used in the embodiment;
Fig. 3 is a diagram showing segments in the embodiment;
Fig. 4 is a diagram showing a folding process performed in the embodiment;
Fig. 5 is a block diagram of a folding part of the simulation apparatus of the embodiment;
Fig. 6 is a diagram schematically showing how pressing and lifting are performed in the embodiment;
Fig. 7 is a diagram showing how folding setting is performed and a bent sweater in the embodiment;
Fig. 8 is a diagram showing parts arrangement when long-sleeved knitwear is folded, wherein the hem is viewed from an upper part of a collar of the knitwear, the upper part being obtained by folding the hem toward a rear body side;
Fig. 9 is a diagram showing an arrangement obtained when folding sleeveless knitwear, in the same manner as in Fig. 8;
Fig. 10 is a diagram showing an arrangement obtained when folding short-sleeved knitwear, in the same manner as in Fig. 8;
Fig. 11 is a modification of how folding of the long-sleeved knitwear is performed, in the same manner as in Fig. 8;
Fig. 12 is a diagram showing an example where the neck of a turtleneck is folded toward a front body side;
Fig. 13 is a diagram showing a modification where the neck of the turtleneck is folded at a middle part thereof;
Fig. 14 is a diagram showing simulation of a condition where folded knitwear is stacked;
Fig. 15 is a diagram showing simulation similar to that of Fig. 14; and
Fig. 16 is a block diagram of a simulation program of the embodiment.

- 2: Simulation apparatus
- 4: Bus
- 6: User input
- 8: Color monitor
- 10: Color printer
- 12: Communication part
- 14: Disc driver
- 16: Memory
- 18: Knit design part
- 20: Data converter
- 22: Filament data processor
- 24: Folding processor
- 30: Segment generator
- 32: Polygon generator
- 34: Rendering part
- 40: Knitwear
- 41: Boundary face
- 42: Front knitted fabric
- 43: Rear knitted fabric
- 44, 45: Chamfering part
- 51: Flattening modifying part
- 52: Bending position setting part
- 53: Bending processor
- 54: Press part
- 55: Lift part
- 56: Smoothing part
- 60: Knitwear
- 61: Contour
- 70: Simulation image
- 71: Image
- 72: Bend line
- 73 to 78: Six views after bending
- 80, 90, 100, 110: Front body
- 81, 91, 101, 111: Rear body
- 82, 102, 112: Right-side sleeve
- 83, 103, 113: Left-side sleeve
- 84, 94, 104, 114: Hem

The best embodiments for carrying out the present invention are described herein below.

### Embodiments

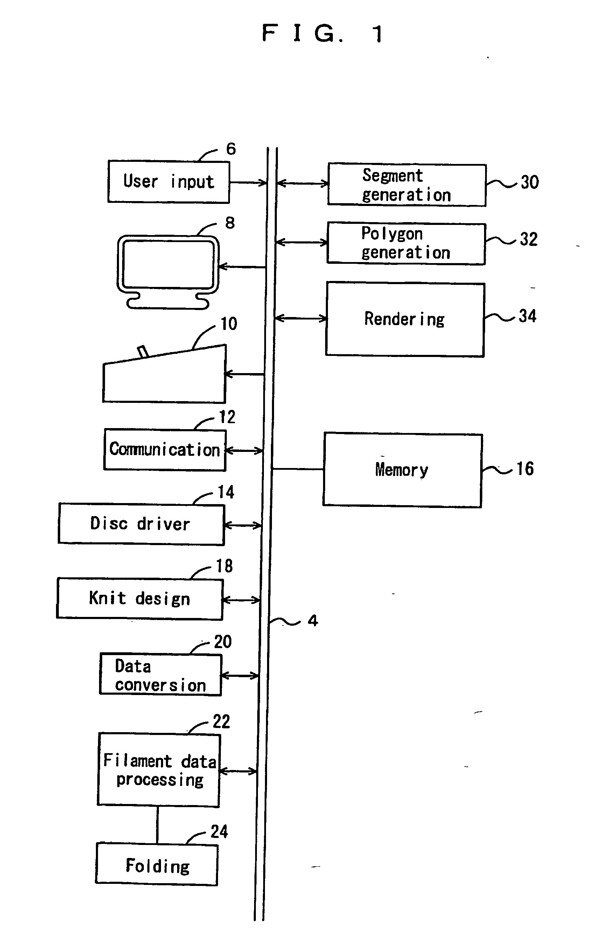

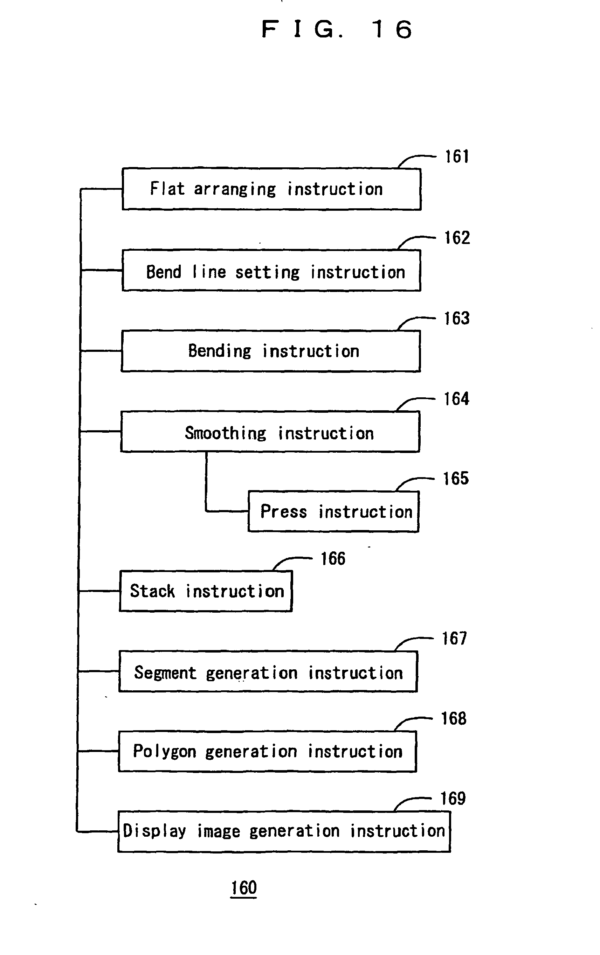

Figs. 1 and 16 show an embodiment and modification. In each diagram, reference numeral 2 represents a simulation apparatus, and 4 a bus, to which a user input 6, such as a stylus, mouse, keyboard, trackball, or joystick, is connected. Reference numeral 8 is a color monitor, and 10 a color printer. The simulation apparatus 2 communicates with a LAN or the Internet via a communication part 12. A disc driver 14 is used for writing data into a disc, and design data, knitting data, or simulation data thereof is stored in a memory 16.

Reference numeral 18 is a knit design part for designing knitwear using the user input 6 or the like, and the designed knitwear is displayed on the color monitor 8. A data converter 20 converts the design data of the knitwear into data that can be knitted by a flat-knitting machine or other knitting machine, whereby the design data is converted into an arrangement of stitches, types of the stitches, and a connecting relation between the stitches. A filament data processor 22 converts knitting data to filament data, which expresses the positions of the stitches in the form of 3D data. The attributes of the 3D data include the types of the stitches and the connecting relation between the stitches. A folding processor 24 folds the virtual knitwear using the filament data.

A segment generator 30 generates a plurality of segments for each stitch shown in the filament data. Each segment is in a prismatic shape, such as a hexagonal cylinder, and each stitch is obtained by connecting the segments. A polygon generator 32 divides each face of each segment into, for example, a triangular polygon. A rendering part 34 generates a display image related to the 3D data of the knitwear expressed by a plurality of polygons, on the color monitor 8 or color printer 10. When generating a display image, a user specifies a view point and magnification range, deletes any polygons that are hidden from the sight of the view point, and carries out a process for overlapping the images with respect to overlapping polygons. The user then maps the texture of the yarn on each polygon, and performs shading on the source light or environment light, to combine thus obtained result with a background image.

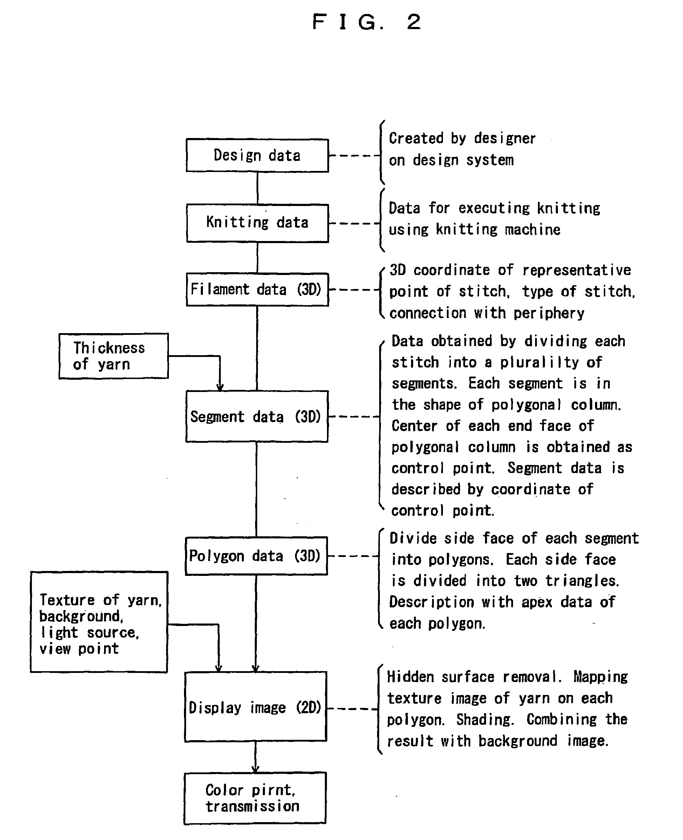

Fig. 2 shows various data used in the embodiment. The design data is data designed by a designer using the knit design part. The knitting data is data obtained by converting it to the data that can be knitted by a knitting machine. The knitting data is converted to segment data, polygon data, and the display image through the filament data. The filament data and polygon data are 3D data, while the display image is 2D data. The filament data describes a representative point of each stitch, that is, a 3D coordinate of the position representing the stitch, as well as the type of the stitch and the connecting relation between the surrounding stitches. In the segment data, each stitch is divided into the plurality of segments, each of which is in the shape of a polygonal column, and the center of each end face of this polygonal column is a control point. One stitch has a plurality of control points, and the segment data can be described by specifying the coordinate of each control point. In the polygon data, a side face of each segment is divided into polygons. For example, each side face of the polygon that is configured by a tetragon is divided into two triangles. The polygon data is described by apex data of the polygon. The display image is obtained by rendering the polygon data. The polygons that are invisible from the sight of the view point are subjected to hidden surface removal, and a texture image of the yarn is mapped on each polygon. Moreover, thus obtained result is subjected to shading and combined with the background image, whereby the display image is obtained.

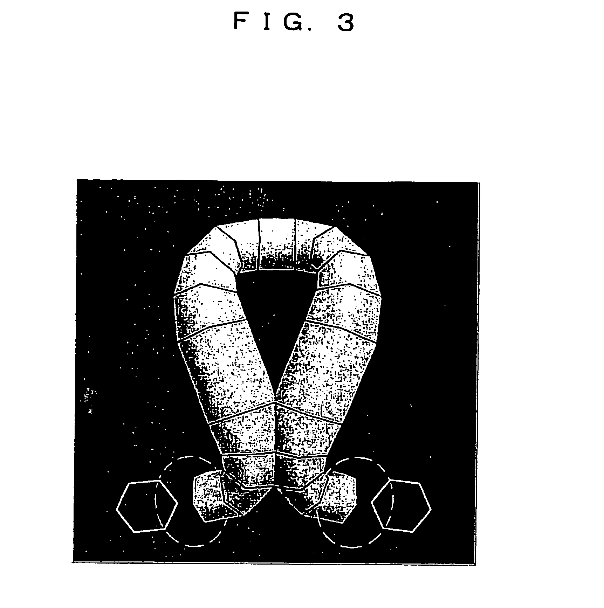

Fig. 3 shows an example of the segments. One stitch is divided into the plurality of segments, each of which is in the shape of a hexagonal cylinder.

Use of the filament data is appropriate for virtually folding the knitwear. The filament data is made simpler than the segment data or polygon data. When the position of the representative point of the stitch exists, the knitwear can be folded at the bend line taken as the border.

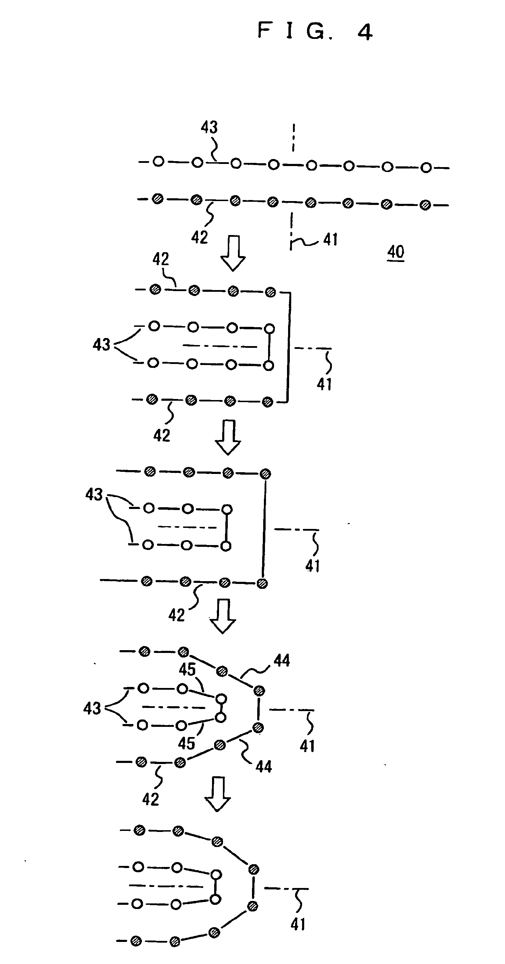

Fig. 4 shows a folding process according to the embodiment. Reference numeral 40 is virtual knitwear, which is cylindrical knitwear knitted by a seamless knit. The knitwear is flattened along a horizontal surface before bending it. Reference numeral 41 is a boundary face containing the bend line and perpendicular to the knitwear 40. Because the knitwear 40 is flattened along the horizontal surface, the boundary face 41 is originally perpendicular. Reference numeral 42 is a front knitted fabric, and 43 a rear knitted fabric. Here, the knitted fabrics 42, 43 are bent at the boundary face 41. Although the bend line does not move at this moment, the boundary face 41 rotates 90° in a direction of bending the knitted fabrics. Next, the faces of two stitches, which are brought closer to the inner boundary face 41 by bending the knitted fabric, are caused to slide in parallel to the faces of the stitches. In other words, the faces of the two stitches of the rear knitted fabric 43 are caused to slide away from the position of bending (the position of the bend line). Note that the faces of two stitches on the front knitted fabric 42 that are far from the boundary face may be caused to slide toward the bend line. In addition, the two faces on the rear knitted fabric 43 and the two faces on the front knitted fabric 42 may be caused to slide in the opposite directions by causing the two faces on the rear knitted fabric 43 to slide away from the bend line, and bringing the two faces on the front knitted fabric 42 close to the bend line. Furthermore, a space equivalent to one, two, or three stitches may be inserted between the faces of the two stitches, and the user can freely set the width of this space. As a result, the bent face of each stitch is moved to the position where the stitches do not interfere with each other. Sliding the stitches may be carried out first, or insertion of the space between the stitches may be carried out first.

Next, the faces of the stitches are inclined in the vicinity of the bend line, that is, chamfering is performed. The width of chamfering parts 44, 45 is equivalent to approximately two to four stitches, which can be set freely by the user. Next, the positions of the stitches are moved so that the interval between stitches becomes equal to the other positions and the directions of the stitches gradually change in relation to, for example, the periphery of the chamfering parts 44, 45. The faces of the stitches are chamfered and the stitches are moved, whereby the faces of the stitches are curved. This process is called "smoothing." In this manner, the virtual knitwear can be folded without determining the presence/absence of collision between the stitches.

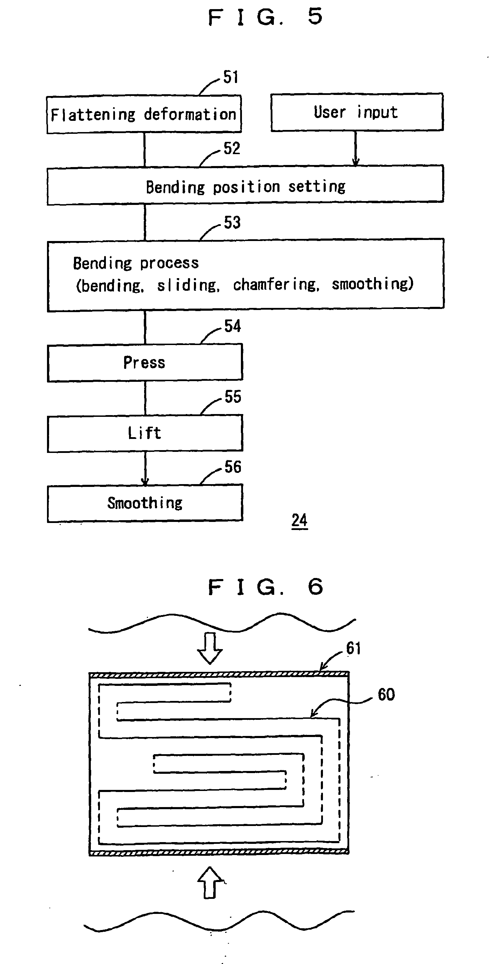

Fig. 5 shows the configuration of the folding processor 24. Object data is the filament data, wherein the virtual knitwear is deformed into a flat shape by a flattening modifying part 51, whereby the stitches of each part are contained in one face. Next, the bend line is set by a bending position setting part 52 in accordance with an input of the user or a default when there is not user input. The knitwear is bent by the bending processor at the boundary face containing the bend line and perpendicular to the knitwear, in the manner shown in Fig. 4. The faces of two stitches that are arranged near the boundary face by the bending and the faces of two stitches far from the boundary faces are caused to slide away from each other. The faces of the stitches are chamfered around the bent part, and the chamfered faces are subjected to smoothing. Next, the virtual knitwear is pressed by a press part 54 to reduce the thickness of the knitwear, and then lifted by a lift part 55 to express the concave/convex generated on the knitwear or the lift on both side parts of the knitwear.

The press and lift processes are shown in Fig. 6, wherein reference numeral 60 is virtual knitwear configured by the filament data. This knitwear is contained in a cylindrical contour 61, and the front and back of the contour (the front side and the back side of the knitwear) are compressed. The knitwear 60 inside the contour 61 is deformed as the contour 61 is compressed, and yet repels the pressure of the contour 61 by using a repelling force proportional to the number of faces of the stitches along the thickness direction. In this manner, the knitwear 60 can be compressed as in a manner where the folded knitted fabrics are pressed by a hand. When lifting, the both sides of the contour 61 are deformed, as shown by the wavy lines in Fig. 6. Because the virtual knitwear 60 is compressed by the contour 61, deformation of the contour 61 as shown by the wavy lines also deforms the knitwear 60 therein. As a result, the concave/convex on the knitwear surface or the warpage of the both side parts of the knitwear can be expressed. A smoothing part 56 is used to carry out smoothing again on the pressed and lifted knitwear, to complete the correction of the filament data.

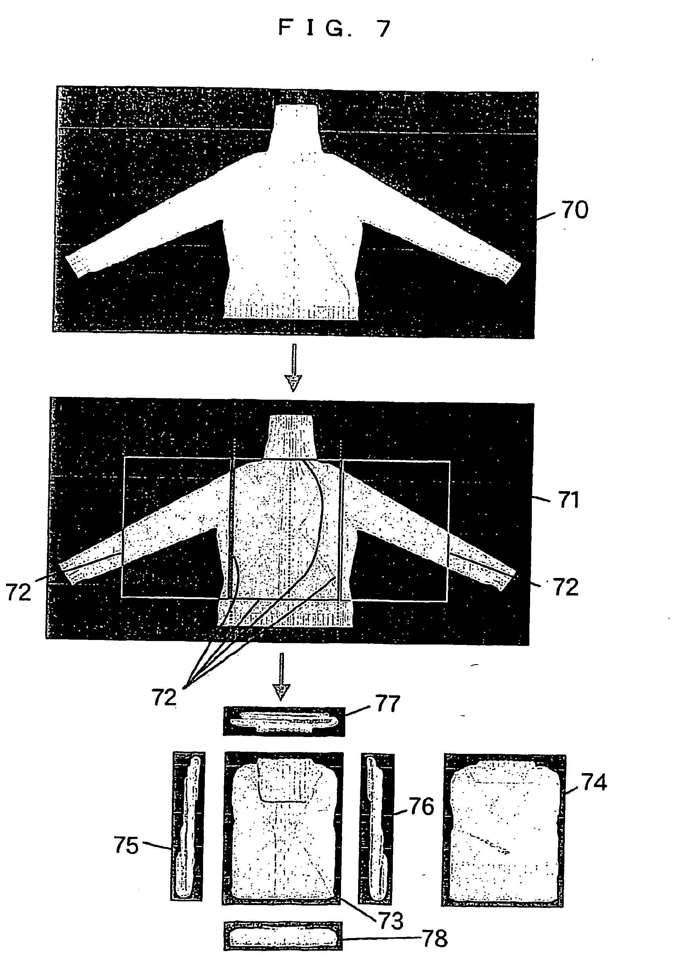

In Fig. 7, how the knitwear is folded is explained using the display image on the color monitor. In a simulation image 70, the virtual knitwear is arranged flatly, and bend lines 72 are set as shown in an image 71. Note that the positions of the bend lines 72 are arbitrarily set, and the dotted line shown in the diagram has no particular meanings. Next, the knitwear is bent at each bend line 72 as shown in Fig. 4. Images 73 to 78 show the bent knitwear viewed from six view points on six views.

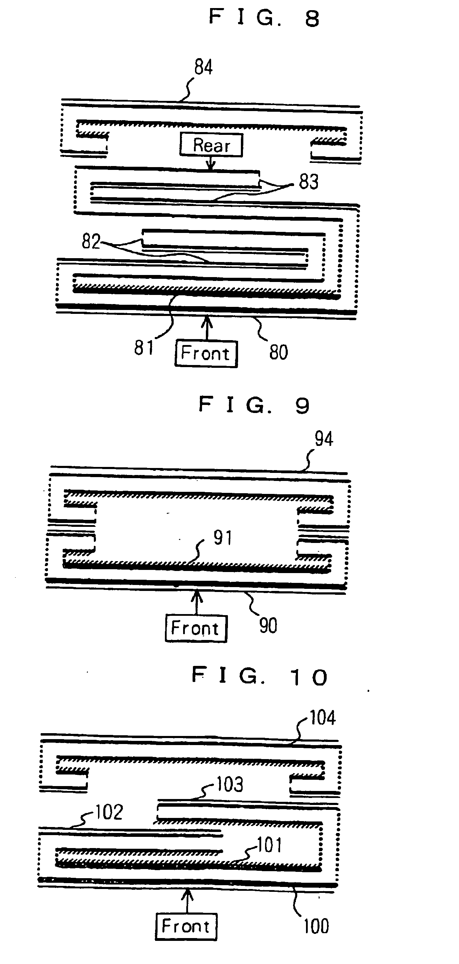

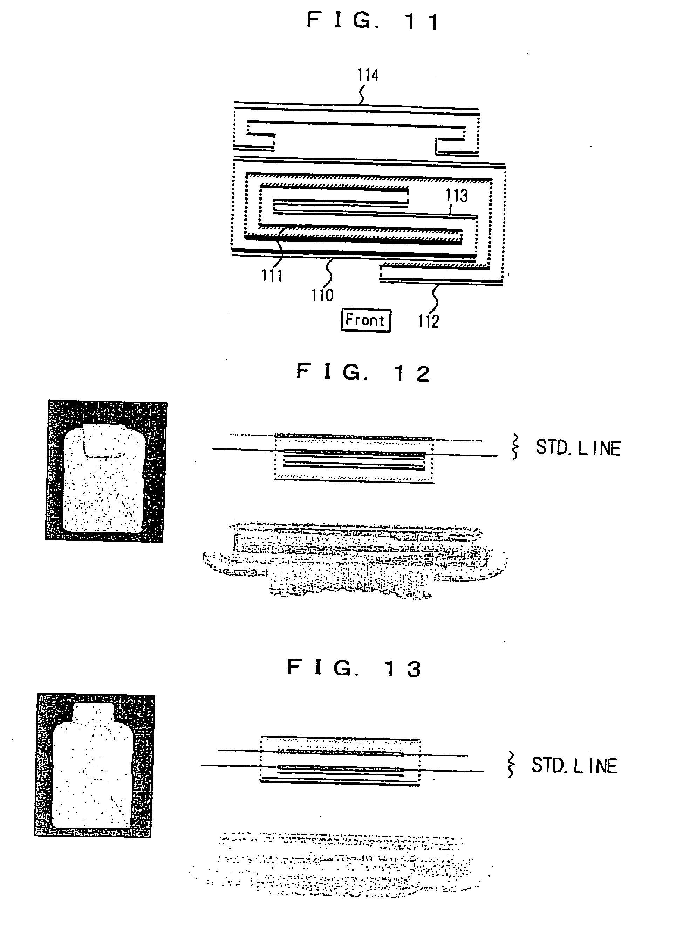

Figs. 8 to 11 show bending examples, wherein the knitwear is viewed from the neck side to the hem side. Reference numerals 84, 94, 104, 114 represent hems folded back to the rear body side. Reference numerals 80, 90, 100, 110 represent front bodies, reference numerals 81, 91, 101, 111 rear bodies, reference numerals 82, 102, 112 right-hand sleeves, and reference numerals 83, 103, 113 left-hand sleeves. The right-hand side and the left-hand side are expressed not in relation to the view points but in relation to the right-hand side and the left-hand side when wearing the knitwear. In Fig. 8, the right-hand sleeve is folded to the rear body side, and the folded left-hand sleeve is stacked thereon. Fig. 9 shows an example of a sleeveless sweater or the like. Fig. 10 shows an example of short-sleeved knitwear. Fig. 11 shows an example where the knitwear is folded such that the right-hand sleeve 112 is folded around the rear body toward the front body.

Fig. 12 shows an example where the neck of a turtleneck sweater is folded. In Fig. 12, the neck is folded at the bend line (STD.LINE) toward the front body side. In Fig. 13, the front neck is bent at the bend line toward the front body side, and the rear neck is bent at the bend line toward the rear body side.

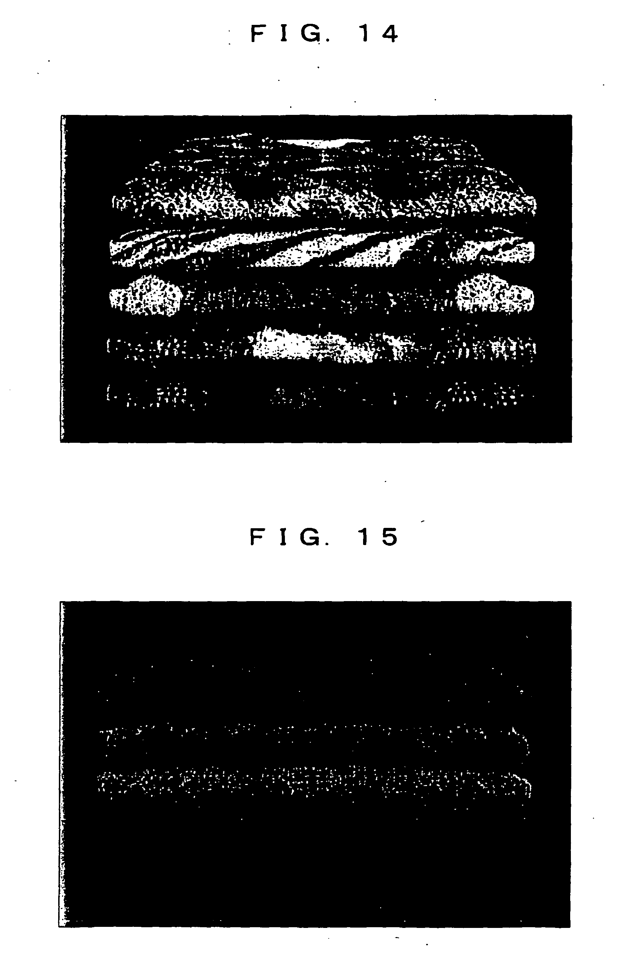

Figs. 14 and 15 show a condition where the folded knitwear is stacked and displayed in a showcase of a virtual store on the network. These images are completed by vertically stacking the filament data, generating the segment data and polygon data for the stacked filament data, and performing rendering thereon. Fig. 14 shows an example where the color pattern of the knitwear is accentuated. Fig. 15 is an example in which the feeling of the material of the knitwear is accentuated.

In the embodiment, the folded knitwear can be simulated easily and accurately, and a sample that facilitates the trading of the knitwear on the network can be obtained.

The simulation apparatus 2 of the embodiment is realized by installing a simulation program on a computer. The simulation program is stored in a CD-ROM or other storage medium, read from the disc driver 14 of the simulation apparatus 2 or input from the Internet or the like through the communication part 12 by using a carrier wave. In either case, the simulation program is stored in the memory 16 or the like.

Fig. 16 shows a simulation program 160. Reference numeral 161 is a flat arranging instruction to flatly arrange the stitches shown in the filament data in the same plane. A bend line setting instruction 162 is for setting the bend line by means of the bend line obtained from the user input or default. A bending instruction 163 is for bending the face of each stitch shown in the filament data about the boundary face containing the bend line and perpendicular to the surface of the knitwear, and rotating the boundary face 90° in the direction of bending the knitwear. In addition, a predetermined space is provided between the faces of two stitches that are brought close to the boundary face by bending the knitwear inward, and the faces of the two stitches and the faces of the two stitches far from the boundary face are caused to slide away from each other, so that the position of each bent face of the stitch is defined. A smoothing instruction 164 is for curving the faces of the stitches on both sides of the boundary face with respect to the bent faces of the stitches, and correcting the stitch positions so that the faces of the stitches on both sides of the boundary face are connected together smoothly. A press instruction 165, which is an auxiliary instruction of the smoothing instruction 164, is for correcting the stitch positions so that the smoothed virtual knitwear is thinned. A stack instruction 166 is for generating an image showing a plurality of vertically stacked virtual knitwear. A segment generation instruction 167 is for generating segments obtained by breaking each stitch into a plurality of segments, for the stitch positions defined by the smoothing instruction 164. A polygon generation instruction 168 is for breaking each segment into a plurality of polygons. A display image generation instruction 169 is for mapping the texture of yarn with respect to the polygons, then performing shading thereon and rendering the polygons, to generate the display image.

## Claims

1. A knitwear folding simulation apparatus (2), obtaining filament data expressing, on virtual cylindrical knitwear (40, 60), 3D positions of stitches and a connecting relation between the stitches, on the basis of design data, and generating a 3D simulation image of the knitwear (40, 60) on the basis of the obtained filament data,
the simulation apparatus (2) being **characterized in** comprising:
flat arrangement means for arranging, on faces of the stitches, the stitches shown in the filament data so that the virtual knitwear (40, 60) is arranged flatly;
bend line setting means for setting, with respect to the flatly arranged vertical knitwear (40, 60) a bend line (72) along a surface of the knitwear (40, 60);
bending means for bending the face of each stitch shown in the filament data, at a boundary face (41) containing the set bend line (72) and perpendicular to the surface of the knitwear (40, 60), rotating the boundary face (41) 90° in a direction of bending the face of each stitch, providing a predetermined space between the faces of two stitches near the boundary face (41) that are faced with each other by bending the face of each stitch inward, and defining a position of the bent face of each stitch by causing the faces of the two stitches an the faces of two stitches far from the boundary face (41) to slide away from each other;
smoothing means for correcting, with respect to the bent faces of the stitches, the positions of the stitches so that the faces of the stitches on both sides of the boundary face (41) are smoothly connected with each other when the faces of the stitches are bent on the both sides of the boundary face (41);
segment generating means for generating segments by breaking each stitch into a plurality of segments, with respect to the positions of the stitches defined by the smoothing means;
polygon generating means for breaking each of the generated segments into a plurality of polygons; and
display image generating means for mapping and shading a texture of yarn on the generated polygons, and performing rendering on thus obtained result to generate a display image.

2. The knitwear folding simulation apparatus (2) according to claim 1, **characterized in that** the smoothing means corrects the positions of the stitches by inclining the faces of the stitches in the vicinity of the bend line (72), and further corrects the corrected positions of the stitches so that an interval between the stitches approaches a predetermined value and an angle between the stitches changes smoothly on both sides of the boundary face (41).

3. The knitwear folding simulation apparatus (2) according to claim 1 or 2, **characterized in** further comprising press means for correcting the positions of the stitches with respect to the filament data obtained after smoothing is performed, so that the thickness of the virtual knitwear (40, 60) is reduced.

4. The knitwear folding simulation apparatus (2) according to any of claims 1 to 3, **characterized in** further comprising means for vertically stacking the filament data in terms of the number of the virtual knitwear (40, 60), the filament data being obtained after smoothing is performed.

5. A knitwear folding computer-implemented simulation method for obtaining, on the basis of design data, filament data expressing, on virtual cylindrical knitwear (40, 60) 3D positions of stitches and a connecting relation between the stitches, and generating a 3D simulation image of the knitwear (40, 60) on the basis of the obtained filament data,
the simulation method being **characterized in** comprising:
a flattening step of arranging, on faces of the stitches, the stitches shown in the filament data so that the virtual knitwear (40, 60) is arranged flatly;
a bend line setting step of setting a bend line (72) along a surface of the knitwear (40, 60), with respect to the flatly arranged virtual knitwear (40, 60);
a bending step of bending the face of each stitch shown in the filament data at a boundary face (41) containing the set bend line (72) and perpendicular to the surface of the knitwear (40, 60) rotating the boundary face (41) 90° in a direction of bending the face of each stitch, providing a predetermined space between the faces of two stitches near the boundary face (41) that are faced with each other by bending the face of each stitch inward, and defining a position of the bent face of each stitch by causing the faces of the two stitches and the faces of two stitches far from the boundary face (41) to slide away from each other;
a smoothing step of correcting, with respect to the bent faces of the stitches, the positions of the stitches so that the faces of the stitches on both sides of the boundary face (41) are smoothly connected with each other when the faces of the stitches are bent on the both sides of the boundary face (41);
a segment generating step of generating segments by breaking each stitch into a plurality of segments, with respect to the positions of the stitches defined by the smoothing means;
a polygon generating step of breaking each of the generated segments into a plurality of polygons; and
a step of mapping and shading a texture of yarn on the generated polygons, and performing rendering on thus obtained result to generate a display image.

6. A computer-readable recording medium, storing therein a program for obtaining, on the basis of design data, filament data expressing, on virtual cylindrical knitwear (40, 60), 3D positions of stitches and a connecting relation between the stitches, and generating a 3D simulation image of the knitwear (40, 60) on the basis of the obtained filament data,
the storage medium being **characterized in that** the computer is caused to function as:
flat arrangement means for arranging, on faces of the stitches, the stitches shown in the filament data so that the virtual knitwear (40, 60) is arranged flatly;
bend line setting means for setting, with respect to the flatly arranged virtual knitwear (40, 60), a bend line (72) along a surface of the knitwear (40, 60);
bending means for bending the face of each stitch shown in the filament data at a boundary face (41) containing the set bend line (72) and perpendicular to the surface of the knitwear (40, 60) rotating the boundary face (41) 90° in a direction of bending the face of each stitch, providing a predetermined space between the faces of two stitches near the boundary face (41) that are faced with each other by bending the face of each stitch inward, and defining a position of the bent face of each stitch by causing the faces of the two stitches and the faces of two stitches far from the boundary face (41) to slide away from each other;
smoothing means for correcting, with respect to the bent faces of the stitches, the positions of the stitches so that the faces of the stitches on both sides of the boundary face (41) are smoothly connected with each other when the faces of the stitches are bent on the both sides of the boundary face (41);
segment generating means for generating segments by breaking each stitch into a plurality of segments, with respect to the positions of the stitches defined by the smoothing means;
polygon generating means for breaking each of the generated segments into a plurality of polygons; and
display image generating means for mapping and shading a texture of yarn on the generated polygons, and performing rendering on thus obtained result to generate a display image.

## Patentansprüche

1. Strickwarenfalt-Simulierungsvorrichtung (2) zum Erhalten von Fadendaten, die auf einem virtuellen zylindrischen Gestrick (40, 60) 3D-Positionen der Maschen und eine Verbindungsbeziehung zwischen den Maschen auf der Basis der Designdaten ausdrücken, und die ein 3D-Simulationsbild des Gestricks (40, 60) auf der Basis der erhaltenen Fadendaten erzeugt, **dadurch gekennzeichnet, dass** die Simulationsvorrichtung (2) umfasst:
Flachanordnungs-Einrichtungen zum Anordnen auf den Seiten der Stiche die Stiche, die in den Fadendaten gezeigt sind, sodass das virtuelle Gestrick (40, 60) flach angeordnet ist;
Knicklinien-Einstelleinrichtung zum Einstellen einer Knicklinie (72) entlang einer Oberfläche des Gestricks (40, 60) bezüglich des flach angeordneten vertikalen Gestricks (40, 60);
Knickeinrichtungen zum Knicken der Seite jeder Masche, die in den Fadendaten gezeigt ist, an einer Grenzfläche (41), die die eingestellte Knicklinie (72) enthält und senkrecht zur Oberfläche des Gestricks (40, 60) steht, Drehen der Grenzfläche (41) um 90° in eine Richtung zum Knicken der Seiten jeder Masche, Vorsehen eines vorgegebenen Abstands zwischen den Seiten der beiden Maschen nahe der Grenzfläche (41), die einander gegenüber liegen, durch Knicken der Seite jeder Masche nach innen, und definieren einer Position der Knickseite jeder Masche durch Veranlassen der Seiten der zwei Maschen und der Seiten der zwei Maschen weit beabstandet von der Grenzfläche (41), um voneinander weg zu gleiten;
Glättungseinrichtung zum Korrigieren der Positionen der Maschen bezüglich der Knickseiten der Maschen, sodass die Seiten der Maschen auf beiden Seiten der Grenzfläche (41) miteinander geglättet verbunden sind, wenn die Seiten der Stiche auf beiden Seiten der Grenzfläche (41) geknickt werden;
Segment-Erzeugungseinrichtungen zum Erzeugen von Segmenten durch Brechen von jeder Masche in mehrere Segmente bezüglich der Positionen der Maschen, die durch die Glättungseinrichtungen definiert sind;
Polygon-Erzeugungseinrichtungen zum Brechen von jedem der erzeugten Segmente in eine Vielzahl von Polygonen; und
Anzeigebild-Erzeugungseinrichtungen zum Mapping und Schattieren einer Textur des Garns auf den erzeugten Polygonen, und Durchführen der Wiedergabe aufgrund der auf diese Weise erhaltenen Ergebnisse, um ein Anzeigebild zu erzeugen.

2. Strickwarenfalt-Simulierungsvorrichtung (2) nach Anspruch 1, **dadurch gekennzeichnet, dass** die Glättungseinrichtung die Positionen der Maschen durch Neigen der Seiten der Stiche in der Nähe der Knicklinie (42) korrigiert und weiterhin die korrigierten Positionen der Maschen korrigiert, sodass ein Intervall zwischen den Maschen sich einem vorgegebenen Wert annähert, und ein Winkel zwischen den Maschen sich sanft auf beiden Seiten der Grenzfläche (41) ändert.

3. Strickwarenfalt-Simulierungsvorrichtung (2) nach Anspruch 1 oder 2, weiterhin **gekennzeichnet durch** eine Presseinrichtung zum Korrigieren der Positionen der Maschen bezüglich der Fadendaten, die erhalten werden, nachdem die Glättung vorgenommen wurde, sodass die Dicke des virtuellen Gestricks (40, 60) reduziert ist.

4. Strickwarenfalt-Simulierungsvorrichtung (2) nach einem der Ansprüche 1 bis 3, weiterhin **gekennzeichnet durch** Einrichtungen zum vertikalen Stapeln der Fadendaten in Ausdrücken der Nummer des virtuellen Gestricks (40, 60), wobei die Fadendaten erhalten werden, nachdem das Glätten durchgeführt ist.

5. Computer-implementiertes Strickwarenfalt-Simulierungsverfahren zum Erhalten, auf der Basis von Designdaten, von Fadendaten, die auf einem virtuellen zylindrischen Gestrick (40, 60) 3D-Positionen der Maschen und eine Verbindungsbeziehung zwischen den Maschen ausdrücken, und zum Erzeugen eines 3D-Simulationsbildes des Gestricks (40, 60) auf der Basis der erhaltenen Fadendaten, **dadurch gekennzeichnet, dass** das Simulationsverfahren umfasst:
einen Flachmach-Schritt zum Anordnen auf den Seiten der Maschen die Maschen, die in den Fadendaten gezeigt sind, sodass das virtuelle Gestrick (40, 60) flach angeordnet ist;
einen Knicklinien-Einstellschritt zum Einstellen einer Knicklinie (72) entlang einer Oberfläche des Gestricks (40, 60) bezüglich des flach angeordneten vertikalen Gestricks (40, 60);
einen Knickschritt zum Knicken der Seite jeder Masche, die in den Fadendaten gezeigt ist, an einer Grenzfläche (41), die die eingestellte Knicklinie (72) enthält und senkrecht zur Oberfläche des Gestricks (40, 60) steht, Drehen der Grenzfläche (41) um 90° in eine Richtung zum Knicken der Seite jeder Masche, Vorsehen eines vorgegebenen Abstands zwischen den Seiten der beiden Maschen nahe der Grenzfläche (41), die einander gegenüber liegen, durch Knicken der Seite jeder Masche nach innen, und Definieren einer Position der Knickseite jeder Masche durch Veranlassen der Flächen der zwei Maschen und der Flächen der zwei Maschen weit beabstandet von der Grenzfläche (41), um voneinander weg zu gleiten;
einen Glättungsschritt zum Korrigieren der Positionen der Maschen bezüglich der Knickseiten der Maschen, sodass die Seiten der Maschen auf beiden Seiten der Grenzfläche (41) miteinander geglättet verbunden sind, wenn die Seiten der Stiche auf beiden Seiten der Grenzfläche (41) geknickt werden;
einen Segment-Erzeugungsschritt zum Erzeugen von Segmenten durch Brechen von jeder Masche in mehrere Segmente bezüglich der Positionen der Maschen, die durch die Glättungseinrichtungen definiert sind;
einen Polygon-Erzeugungsschritt zum Brechen von jedem der erzeugten Segmente in eine Vielzahl von Polygonen; und
einen Schritt zum Mapping und Schattieren einer Textur des Garns auf den erzeugten Polygonen, und Durchführen der Wiedergabe aufgrund der auf diese Weise erhaltenen Ergebnisse, um ein Anzeigebild zu erzeugen.

6. Rechnerlesbares Aufzeichnungsmedium, das ein Programm speichert zum Erhalten, auf der Basis von Designdaten, von Fadendaten, die auf einem virtuellen zylindrischen Gestrick (40, 60) 3D-Positionen der Maschen und eine Verbindungsbeziehung zwischen den Maschen auf der Basis der Designdaten ausdrücken, und das ein 3D-Simulationsbild des Gestricks (40, 60) auf der Basis der erhaltenen Fadendaten erzeugt, wobei das Speichermedium **dadurch gekennzeichnet ist, dass** der Rechner bewirkt zu funktionieren als:
Flachanordnungs-Einrichtungen zum Anordnen auf den Seiten der Stiche die Stiche, die in den Fadendaten gezeigt sind, sodass das virtuelle Gestrick (40, 60) flach angeordnet ist;
Knicklinien-Einstelleinrichtung zum Einstellen einer Knicklinie (72) entlang einer Oberfläche des Gestricks (40, 60) bezüglich des flach angeordneten vertikalen Gestricks (40, 60);
Knickeinrichtungen zum Knicken der Seite jeder Masche, die in den Fadendaten gezeigt ist, an einer Grenzfläche (41), die die eingestellte Knicklinie (72) enthält und senkrecht zur Oberfläche des Gestricks (40, 60) steht, Drehen der Grenzfläche (41) um 90° in eine Richtung zum Knicken der Seiten jeder Masche, Vorsehen eines vorgegebenen Abstands zwischen den Seiten der beiden Maschen nahe der Grenzfläche (41), die einander gegenüber liegen, durch Knicken der Seite jeder Masche nach innen, und definieren einer Position der Knickseite jeder Masche durch Veranlassen der Seiten der zwei Maschen und der Seiten der zwei Maschen weit beabstandet von der Grenzfläche (41), um voneinander weg zu gleiten;
Glättungseinrichtung zum Korrigieren der Positionen der Maschen bezüglich der Knickseiten der Maschen, sodass die Seiten der Maschen auf beiden Seiten der Grenzfläche (41) miteinander geglättet verbunden sind, wenn die Seiten der Stiche auf beiden Seiten der Grenzfläche (41) geknickt werden;
Segment-Erzeugungseinrichtungen zum Erzeugen von Segmenten durch Brechen von jeder Masche in mehrere Segmente bezüglich der Positionen der Maschen, die durch die Glättungseinrichtungen definiert sind;
Polygon-Erzeugungseinrichtungen zum Brechen von jedem der erzeugten Segmente in eine Vielzahl von Polygonen; und
Anzeigebild-Erzeugungseinrichtungen zum Mapping und Schattieren einer Textur des Garns auf den erzeugten Polygonen, und Durchführen der Wiedergabe aufgrund der auf diese Weise erhaltenen Ergebnisse, um ein Anzeigebild zu erzeugen.

## Revendications

1. Appareil de simulation de pliage de vêtements tricotés (2), permettant d'obtenir des données de brins exprimant, sur un tricot cylindrique virtuel (40, 60), des positions 3D de mailles et une relation de connexion entre les mailles, sur la base de données de conception, et générant une image de simulation 3D du tricot (40, 60) sur la base des données de brins obtenues,
l'appareil de simulation (2) étant **caractérisé en ce qu'**il comprend :
des moyens d'agencement à plat pour agencer, sur des faces des mailles, les mailles représentées dans les données de brins de telle sorte que le tricot virtuel (40, 60) soit agencé à plat ;
des moyens de réglage de ligne de pliage pour régler, en ce qui concerne le tricot vertical agencé à plat (40, 60), une ligne de pliage (72) suivant une surface du tricot (40, 60) ;
des moyens de courbure pour courber la face de chaque maille représentée dans les données de brins, au niveau d'une face frontière (41) contenant la ligne de pliage réglée (72) et perpendiculaire à la surface du tricot (40, 60), tourner la face frontière (41) de 90° dans une direction de courbure de la face de chaque maille, assurer un espace prédéterminé entre les faces de deux mailles proches de la face frontière (41) qui sont mises face à face en courbant la face de chaque maille vers l'intérieur, et définir une position de la face courbée de chaque maille en faisant en sorte que les faces des deux mailles et les faces de deux mailles éloignées de la face frontière (41) s'écartent entre elles ;
des moyens de lissage pour corriger, en ce qui concerne les faces courbées des mailles, les positions des mailles de telle sorte que les faces des mailles des deux côtés de la face frontière (41) soit raccordées en douceur entre elles lorsque les faces des mailles sont courbées des deux côtés de la face frontière (41) ;
des moyens de génération de segments pour générer des segments en décomposant chaque maille en une pluralité de segments, en ce qui concerne les positions des mailles définies par les moyens de lissage ;
des moyens de génération de polygones pour décomposer chacun des segments générés en une pluralité de polygones ; et
des moyens de génération d'image à afficher pour mapper et griser une texture de fils sur les polygones générés, et réaliser un rendu sur le résultat ainsi obtenu pour générer une image à afficher.

2. Appareil de simulation de pliage de vêtements tricotés (2) selon la revendication 1, **caractérisé en ce que** les moyens de lissage corrigent les positions des mailles en inclinant les faces des mailles au voisinage de la ligne de pliage (72) et corrigent en outre les positions corrigées des mailles de telle sorte que l'intervalle entre les mailles approche une valeur prédéterminée et qu'un angle entre les mailles change en douceur des deux côtés de la face frontière (41).

3. Appareil de simulation de pliage de vêtements tricotés (2) selon la revendication 1 ou 2, **caractérisé en ce qu'**il comprend en outre des moyens de pressage pour corriger les positions des mailles en ce qui concerne les données de brins obtenues après la réalisation du lissage, afin que l'épaisseur du tricot virtuel (40, 60) soit réduite.

4. Appareil de simulation de pliage de vêtements tricotés (2) selon l'une quelconque des revendications 1 à 3, **caractérisé en ce qu'**il comprend en outre des moyens pour empiler verticalement les données de brins en ce qui concerne le numéro du tricot virtuel (40, 60), les données de brins étant obtenues après la réalisation du lissage.

5. Procédé de simulation, mis en oeuvre par ordinateur, de pliage de vêtements tricotés pour obtenir, sur la base de données de conception, des données de brins exprimant, sur un tricot cylindrique virtuel (40, 60), des positions 3D de mailles et une relation de connexion entre les mailles, et générant une image de simulation 3D du tricot (40, 60) sur la base des données de brins obtenues,
le procédé de simulation étant **caractérisé en ce qu'**il comprend :
une étape de mise à plat consistant à agencer, sur des faces des mailles, les mailles représentées dans les données de brins de telle sorte que le tricot virtuel (40, 60) soit agencé à plat ;
une étape de réglage de ligne de pliage consistant à régler une ligne de pliage (72) suivant une surface du tricot (40, 60) en ce qui concerne le tricot vertical agencé à plat (40, 60) ;
une étape de courbure consistant à courber la face de chaque maille représentée dans les données de brins, au niveau d'une face frontière (41) contenant la ligne de pliage réglée (72) et perpendiculaire à la surface du tricot (40, 60), tourner la face frontière (41) de 90° dans une direction de courbure de la face de chaque maille, assurer un espace prédéterminé entre les faces de deux mailles proches de la face frontière (41) qui sont mises face à face en courbant la face de chaque maille vers l'intérieur, et définir une position de la face courbée de chaque maille en faisant en sorte que les faces des deux mailles et les faces de deux mailles éloignées de la face frontière (41) s'écartent entre elles ;
une étape de lissage consistant à corriger, en ce qui concerne les faces courbées des mailles, les positions des mailles de telle sorte que les faces des mailles des deux côtés de la face frontière (41) soit raccordées en douceur entre elles lorsque les faces des mailles sont courbées des deux côtés de la face frontière (41) ;
une étape de génération de segments consistant à générer des segments en décomposant chaque maille en une pluralité de segments, en ce qui concerne les positions des mailles définies par les moyens de lissage ;
une étape de génération de polygones consistant à décomposer chacun des segments générés en une pluralité de polygones ; et
une étape consistant à mapper et griser une texture de fils sur les polygones générés, et réaliser un rendu sur le résultat ainsi obtenu pour générer une image à afficher.

6. Support d'enregistrement lisible par ordinateur, mémorisant sur lui un programme pour obtenir, sur la base de données de conception, des données de brins exprimant, sur un tricot cylindrique virtuel (40, 60), des positions 3D de mailles et une relation de connexion entre les mailles, et générant une image de simulation 3D du tricot (40, 60) sur la base des données de brins obtenues,
le support de stockage étant **caractérisé en ce que** le l'ordinateur est amené à fonctionner en tant que :
des moyens d'agencement à plat pour agencer, sur des faces des mailles, les mailles représentées dans les données de brins de telle sorte que le tricot virtuel (40, 60) soit agencé à plat ;
des moyens de réglage de ligne de pliage pour régler, en ce qui concerne le tricot vertical agencé à plat (40, 60), une ligne de pliage (72) suivant une surface du tricot (40, 60) ;
des moyens de courbure pour courber la face de chaque maille représentée dans les données de brins, au niveau d'une face frontière (41) contenant la ligne de pliage réglée (72) et perpendiculaire à la surface du tricot (40, 60), tourner la face frontière (41) de 90° dans une direction de courbure de la face de chaque maille, assurer un espace prédéterminé entre les faces de deux mailles proches de la face frontière (41) qui sont mises face à face en courbant la face de chaque maille vers l'intérieur, et définir une position de la face courbée de chaque maille en faisant en sorte que les faces des deux mailles et les faces de deux mailles éloignées de la face frontière (41) s'écartent entre elles ;
des moyens de lissage pour corriger, en ce qui concerne les faces courbées des mailles, les positions des mailles de telle sorte que les faces des mailles des deux côtés de la face frontière (41) soit raccordées en douceur entre elles lorsque les faces des mailles sont courbées des deux côtés de la face frontière (41) ;
des moyens de génération de segments pour générer des segments en décomposant chaque maille en une pluralité de segments, en ce qui concerne les positions des mailles définies par les moyens de lissage ;
des moyens de génération de polygones pour décomposer chacun des segments générés en une pluralité de polygones ; et
des moyens de génération d'image à afficher pour mapper et griser une texture de fils sur les polygones générés, et réaliser un rendu sur le résultat ainsi obtenu pour générer une image à afficher.
